# EUROPÄISCHE PATENTANMELDUNG

(11) **EP 2 196 885 A1**
(43) Veröffentlichungstag der Anmeldung: **16.06.2010**
(21) Anmeldenummer: 08021720.1
(22) Anmeldetag: 15.12.2008
(51) Int. Cl.: G05D 7/06, G05D 11/00, G05D 11/13

(54) **Verfahren und Vorrichtung zur Verschneidung von Flüssigkeiten unterschiedlicher Eigenschaften als Regelgröße**

(71) Anmelder: Z & H Wassertechnik GmbH, 66606 St. Wendel (DE)
(72) Erfinder: Heckmann, Jan, 66606 St. Wendel (DE)
(74) Vertreter: Seifert, Thomas

(57) **Zusammenfassung**

Ein Verfahren und eine Vorrichtung zur Verschneidung von Flüssigkeiten unterschiedlicher Eigenschaften als Regelgröße sollen auch bei schwankenden Flüssigkeitseigenschaften und Drücken eine Verschnittflüssigkeit mit gleichbleibender Eigenschaft gewährleisten.

Dazu umfasst der Regelkreislauf die folgenden Schritte:
a) Vergleich der gemessenen Regelgröße mit einem vorgegebenen Sollbereich,
b) bei einer Abweichung der gemessenen Regelgröße vom Sollbereich Veränderung des Mischungsverhältnisses um einen vorgegebenen Änderungsbetrag im Hinblick auf eine Annäherung an den Sollbereich,
c) Abwarten einer vorgegebenen Pausenzeit bis zur Wiederholung des Regelkreislaufs.

Eine Vorrichtung, mit der sich das beschriebene Verfahren durchführen lässt, umfasst Zuleitungen für die Flüssigkeiten unterschiedlicher Eigenschaften, eine Ableitung für die Verschnittflüssigkeit, eine steuerbare Mischeinrichtung, eine Messeinrichtung für die Regelgröße in der Ableitung, Druckschalter in den Zuleitungen und eine Steuereinheit.

## Beschreibung

Die Erfindung bezieht sich auf ein Verfahren und eine Vorrichtung zur Verschneidung von Flüssigkeiten unterschiedlicher Eigenschaften als Regelgröße.

Im Rahmen der Erfindung kann eine Flüssigkeit Wasser sein, aber auch alle anderen Arten von Flüssigkeiten oder Gasen. Die Eigenschaft, in der sich die Flüssigkeiten unterscheiden, kann beispielsweise die Leitfähigkeit, aber auch alle anderen Arten von Eigenschaften sein.

Beispielsweise werden in der Industrie und zur Betreibung größerer Gebäude in steigendem Maße Wasser von bestimmter Qualität gebraucht. Es kommt immer häufiger vor, dass die vorhandenen Stadt- oder Brunnenwässer diesen Qualitätsanforderungen nicht entsprechen und deshalb aufbereitet werden müssen.

Unter dem Begriff "Aufbereitung eines Wassers" ist dabei die Entfernung bestimmter Stoffe aus dem Wasser zu verstehen. Bekannte Verfahren zur Wasseraufbereitung sind z.B.: Filtration, Enthärtung, Entcarbonisierung, Vollentsalzung, Umkehrosmose und Elektrodeionisation.

Zur Herstellung dieser aufbereiteten Wässer entstehen Kosten. Für bestimmte Anwendungsfälle ist es jedoch nicht notwendig, die gesamte für den Prozess erforderliche Wassermenge aufzubereiten. Dies bedeutet, aufbereitetes Wasser und Rohwasser müssen miteinander verschnitten werden. Zwar gibt es Verschneideventile, die auf ein festes Mischverhältnis eingestellt werden können, doch diese müssen immer wieder auf ihre Genauigkeit hin kontrolliert und manuell an veränderte Wasserqualitäten angepasst werden. Außerdem funktionieren diese Verschneideventile nur dann mit hinreichender Genauigkeit, wenn die Druckdifferenzen bei den beiden zu verschneidenden Wässern konstant sind. Deshalb kommen diese "einfachen Verschneideventile" vorwiegend bei Enthärtungsanlagen zum Einsatz.

Ein Anwendungsfall für Wasser gleichbleibender Qualität ist Kühlwasser für einen Kühlturm. Das Wasser wird oben im Rückkühlturm verrieselt und im Gegenstromverfahren mit Luft durchströmt. Dabei kühlt sich das Wasser ab, weil ein Teil verdunstet. Die Wärmeenergie, die das Wasser abgibt ist abhängig von den Temperaturen des Ein- und Auslaufes des Kühlturms. Durch die Verdunstung des Wassers konzentrieren sich die zurückbleibenden Salze im restlichen Wasser auf, was als Eindickung bezeichnet wird. Dadurch übersteigen die Salze nach mehreren Kreislaufführungen des Wassers die kritischen Werte, die etwa in der VDI 3803 festgehalten sind. Beim Erreichen dieser Grenzwerte muss Wasser aus dem Kreislauf abgeführt und frisches Wasser zugeführt werden, um das Kühlwasser wieder zu verdünnen. Dieser Vorgang wird als Absalzung bezeichnet. Theoretisch könnte ein Rückkühlwerk mit unendlicher Eindickung betrieben werden, wenn ausschließlich vollentsalztes Wasser (VE-Wasser) nachgespeist würde. In der Praxis macht dies jedoch keinen Sinn, da ein Kühlturm große Mengen an organischem und anorganischem Material aus der Luft auswäscht, was bei zu großer Eindickung zu Problemen führen würde. In der Praxis hat sich durchgesetzt, dass auch bei optimaler Wasserqualität nur eine 5-fache Eindickung eingestellt wird. Bei etwa dieser Eindickung liegt das Optimum in Bezug auf Betriebssicherheit und Wirtschaftlichkeit. Um möglichst nahe an diese optimale 5-fache Eindickung zu gelangen, ist es in vielen Fällen wirtschaftlich, das Zusatzwasser aufzubereiten. In diesem Zusammenhang stehen die Verfahren Enthärtung, Entcarbonisierung, Vollentsalzung und Umkehrosmose zur Verfügung. Bei all diesen Verfahren macht es Sinn, das aufbereitete Wasser mit Rohwasser zu verschneiden. Von der Präzision und Qualität dieser Verschneidung hängt später in hohem Maße die Wirtschaftlichkeit und Betriebssicherheit der gesamten Kühlturmanlage ab. Für die Bestimmung des optimalen Verschneidegrades muss zunächst berechnet werden, welcher Parameter bei 5-facher Eindickung zuerst an den Grenzwert der VDI 3803 stößt, woraus sich dann die Leitfähigkeit des Verschnittwassers ergibt.

Aus der DE 10 2005 035 950 A1 sind ein Verfahren und eine Vorrichtung zur Reinigung industrieller Abwässer bekannt. In diesem Zusammenhang wird vorgeschlagen, ein Filtrat vor dem Eintritt in ein Kühlwassersystem mit einem Konzentrat leitfähigkeitsgesteuert zu verschneiden, um eine Mindesthärte des Recyclewassers zu erhalten.

Die Aufgabe der vorliegenden Erfindung besteht darin, ein Verfahren und eine Vorrichtung zur Verschneidung von Flüssigkeiten anzugeben, die auch bei schwankenden Flüssigkeitseigenschaften und Drücken eine Verschnittflüssigkeit mit gleichbleibender Eigenschaft gewährleisten.

Diese Aufgabe wird gelöst mit den Merkmalen der unabhängigen Ansprüche. Vorteilhafte Ausgestaltungen der Erfindung ergeben sich aus den Unteransprüchen.

Bei dem erfindungsgemäßen Verfahren umfasst der Regelkreislauf die folgenden Schritte:
a) Vergleich der gemessenen Regelgröße mit einem vorgegebenen Sollbereich,
b) bei einer Abweichung der gemessenen Regelgröße vom Sollbereich Veränderung des Mischungsverhältnisses um einen vorgegebenen Änderungsbetrag im Hinblick auf eine Annäherung an den Sollbereich,
c) Abwarten einer vorgegebenen Pausenzeit bis zur Wiederholung des Regelkreislaufs.

In der Praxis hat sich gezeigt, dass sich ein besonders gutes Ergebnis des Verschnitts ergibt, wenn das Mischungsverhältnis nur um einen geringen vorgegebenen Änderungsbetrag im Hinblick auf eine Annäherung an den Sollbereich geändert und anschließend eine vorgegebene Pausenzeit abgewartet wird, bevor anhand des nächsten Vergleichs zwischen gemessener Regelgröße und vorgegebenem Sollbereich über eine weitere Änderung des Mischungsverhältnisses entschieden wird. Der Sollbereich wird dabei durch einen Sollwert und eine obere und untere Hysterese definiert.

Vorteilhafterweise wird die Regelgröße kontinuierlich gemessen.

Für eine weitere Beruhigung des Regelkreislaufs im Sinne einer gleichmäßigen Qualität der Verschnittflüssigkeit wird vorgeschlagen, dass die Abweichung der gemessenen Regelgröße vom Sollbereich während einer vorgegebenen Reaktionsverzögerungszeit bestehen muss, damit eine Veränderung des Mischungsverhältnisses vorgenommen wird.

Zur Erhöhung der Betriebssicherheit kann vorgesehen werden, dass bei einem Druckabfall in einer Zuleitung der Flüssigkeiten unterschiedlicher Eigenschaften unter einen vorgegebenen Schaltpunkt diese Zuleitung vollständig geschlossen und die andere Zuleitung ohne Druckabfall vollständig geöffnet wird. Dadurch wird sichergestellt, dass in jedem Fall dem Verbraucher Flüssigkeit zugeführt wird. Es wäre auch möglich, die Druckschalter über eine Brücke zu deaktivieren. Dies hat bei einem Druckabfall zur Folge, dass das Ventil die Seite ohne Druckabfall komplett schließt. Damit kann verhindert werden, dass Flüssigkeit außerhalb der Sollqualität eingespeist wird.

Eine Weiterbildung des Erfindung sieht vor, dass der Volumenstrom der Verschnittflüssigkeit gemessen wird und bei Unterschreiten eines vorgegebenen Grenzvolumenstroms der Regelkreislauf unterbrochen wird, bis der Grenzvolumenstrom wieder überschritten wird. Beim Stillstand, d.h. wenn keine Verschnittflüssigkeit entnommen wird, kann sich die Regelgrößeeigenschaft der Verschnittflüssigkeit ändern, was zu einer Veränderung des Mischungsverhältnisses führt, obwohl keine Verschnittflüssigkeit fließt. Je nach Dauer ohne Entnahme einer Verschnittflüssigkeit kann das Mischungsverhältnis extrem verändert werden, so dass bei erneuter Abnahme von Verschnittflüssigkeit das Mischungsverhältnis erst wieder in seine ursprüngliche Position geregelt werden müsste, was aufgrund des geringen vorgegebenen Änderungsbetrags relativ lange dauern könnte.

Eine erfindungsgemäße Vorrichtung, mit der sich das beschriebene Verfahren durchführen lässt, umfasst Zuleitungen für die Flüssigkeiten unterschiedlicher Eigenschaften, eine Ableitung für die Verschnittflüssigkeit, eine steuerbare Mischeinrichtung, eine Messeinrichtung für die Regelgröße in der Ableitung, Druckschalter in den Zuleitungen und eine Steuereinheit.

Für die Realisierung der beschriebenen Unterbrechung des Regelkreislaufs bei Unterschreiten eines vorgegebenen Grenzvolumenstroms ist eine Volumenstrommesseinrichtung in der Ableitung vorgesehen. Diese kann ein Schwebekörperdurchflussmesser mit Grenzwertgeber sein.

Eine einfache Ausgestaltung der Vorrichtung ergibt sich, wenn die steuerbare Mischeinrichtung ein motorgesteuertes 3-Wegeventil ist.

Wie schon eingangs erwähnt, kann die Flüssigkeit Wasser sein, aber daneben auch alle anderen Arten von Flüssigkeiten oder Gasen.

Die elektrische Leitfähigkeit ist als Regelparameter eine sinnvolle Größe, da sie sehr betriebssicher und kontinuierlich messbar ist. Die elektrische Leitfähigkeit ist das Gegenteil des spezifischen Widerstands. Sie nimmt mit dem Gehalt an gelösten Salzen zu und hängt von der Temperatur ab. Sie wird gewöhnlich in Mikrosiemens pro Zentimeter (µS/cm) bei einer Temperatur von 25°C ausgedrückt.Dieser Messwert wird mit LF25 angegeben.Die elektrische Leitfähigkeit eines Wassers gibt seinen Salzgehalt an. Durch die leitfähigkeitsgesteuerte Verschneidung können nicht nur die optimalen Werte einfach eingestellt werden, sondern die Anlage regelt auch automatisch nach, wenn sich die Wasserqualität und/oder der Druck auf einer der beiden Eingangsseiten ändern. Dadurch ist, im Rahmen einer einstellbaren Hysterese, eine gleichbleibende Leitfähigkeit des Verschnittwassers gewährleistet.

Für die Messung der elektrischen Leitfähigkeit kann eine bekannte Leitfähigkeitssonde verwendet werden.

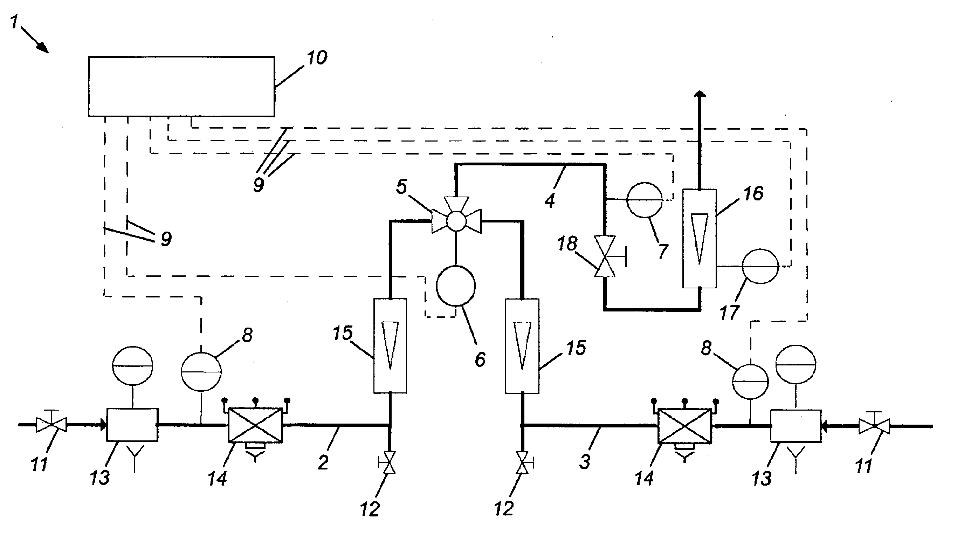

Anhand der Zeichnung, aus der sich auch weitere Ausgestaltungen der Erfindung ergeben, ist die Erfindung näher erläutert.

In der Figur ist ein Fließschema für eine leitfähigkeitsgesteuerte Verschneidung von Wässern mit unterschiedlicher elektrischer Leitfähigkeit dargestellt.

Die Vorrichtung 1 zur Verschneidung von Wässern umfasst Zuleitungen 2, 3 für Wasser mit unterschiedlichen elektrischen Leitfähigkeiten und eine Ableitung 4 für das Verschnittwasser.

In der Zuleitung 2 wird beispielsweise Stadtwasser oder Brunnenwasser und in der Zuleitung 3 voll- oder teilentsalztes Wasser oder Umkehrosmosewasser zugeleitet.

Die Zuleitungen 2, 3 und die Ableitung 4 sind mit einer steuerbaren Mischeinrichtung in Form eines 3-Wegeventils 5 verbunden, das mittels eines Motors 6 gesteuert werden kann und zur Einstellung des Mischungsverhältnisses dient. Das Kunststoffventil hat beispielsweise eine L- Kugel, wodurch das Ventil nie vollständig geschlossen werden kann. Das Ventil 5 eignet sich für neutrale, aggressive, flüssige und gasförmige Medien. Das Schließ- bzw. Öffnungsverhalten ist unabhängig vom Betriebsdruck.

In der Ableitung 4 ist eine Messeinrichtung für die elektrische Leitfähigkeit des Verschnittwassers in Form einer Leitfähigkeitssonde 7 vorgesehen. Die Leitfähigkeitssonde 7 dient zur induktiven Messung der elektrischen Leitfähigkeit des Verschnittwassers.

In den Zuleitungen 2, 3 sind Druckschalter 8 vorgesehen, die einen einstellbaren Schaltbereich von beispielsweise 0 - 4 bar besitzen. Sofern der Druck des Wassers in der Zuleitung 2, 3 den Schaltpunkt unterschreitet wechselt ein Mikroschalter die Kontaktstellung. Überschreitet der Druck den Schaltpunkt wieder fällt der Kontakt in seine Ursprungslage zurück. Die Hysterese des Druckschalters 8 beim eingestellten Druck beträgt beispielsweise 0,15 bar.

Über Leitungen 9 ist eine Steuereinheit 10 mit den Messeinrichtungen und dem Motor 6 verbunden. Die Steuereinheit 10 steuert die Vorrichtung 1 vollautomatisch, indem Sie das 3-Wegeventil 5 über den Motor 6 steuert. Darüber hinaus können an der Steuereinheit 10 die Vorgabewerte für den Betrieb der Vorrichtung 1 eingestellt werden und im Störungsfall Meldungen auf einem Display angezeigt und auch auf ein Leitsystem weitergegeben werden.

Die Zuleitungen 2, 3 weisen ferner Drosselventile 11 und Ablassventile 12 auf. Daneben sind in den Zuleitungen rückspülbare Feinfilter 13 eingebaut. Die rückspülbaren Feinfilter 13 sichern die ununterbrochene Wasserversorgung mit gefiltertem Wasser und verhindern das Einspülen von Fremdpartikeln, wie z.B. Rostteilchen, Hanfreste und Sandkörner. Sie liefern auch beim Rückspülen gefiltertes Wasser. Damit sind die anderen Bauteile vor Fremdpartikeln geschützt, die zum Versagen der Vorrichtung führen könnten.

Als Sicherheitsarmatur sind in den Zuleitungen Systemtrenner 14 eingebaut. Die Systemtrenner 14 sind in verschiedenen überregionalen Zertifizierungen enthalten und wurden zum Schutz von Trinkwassersystemen vor Verunreinigung durch verschmutzte Flüssigkeiten entworfen, die keine toxischen oder mikrobiologischen Gesundheitsrisiken für das menschliche Leben darstellen. Die Systemtrenner 14 ist in eine einlaufseitige, eine mittlere und eine auslaufseitige Kammer unterteilt, die jeweils mit einem Druckstopfen ausgerüstet sind. Zwei voneinander unabhängigen Rückflussverhinder, die die mittlere Kammer reduzierten Drucks von den beiden anderen Kammern trennen, sind drucklos geschlossen. Ein Entlastungsventil in der mittleren Kammer ist ebenfalls drucklos geschlossen, damit behandeltes Wasser nicht zurück ins Trinkwassernetz fließen kann. Auf der Seite des voll- oder teilentsalzten Wassers oder Umkehrosmosewassers ist diese Sicherheitsmaßnahme nicht immer zwingend vorgeschrieben. Die Armatur wird aus Sicherheitsgründen trotzdem eingebaut, da nicht bekannt ist für welche anderen Anwendungen das voll- oder teilentsalztes Wasser oder Umkehrosmosewasser noch verwendet wird.

Schwebekörperdurchflussmesser 15 dienen in den Zuleitungen 2, 3 zur optischen Wiedergabe des aktuellen Volumenstroms und des daraus abzuleitenden Mischungsverhältnisses. Die Schwebekörperdurchflussmesser 15 verfügen über ein Messrohr aus Trogamid-T bzw. Polysulfon, das für den Einsatz bei neutralen bzw. aggressiven Medien geeignet ist. An den Enden des Messrohrs angespritzte Gewindestutzen dienen zur Aufnahme von Armaturenverschraubungen. An den Stirnseiten eingelassene O-Ringe sorgen für eine zuverlässige Abdichtung zwischen Messrohr und Armaturenverschraubung ohne Radialkräfte zu erzeugen, die zum Bersten des Rohres führen können. Eine auf das Messrohr aufgedruckte Messskala ist jeweils auf das entsprechende Durchflussmedium abgestimmt und gibt die Durchflussmenge in 1/h oder m³/h an. Angespritzte Schwalbenschwanzleisten dienen zur Aufnahme von Sollwert-Zeigern oder Grenzwert- und Signaleinrichtungen.

In der Ableitung 4 ist ein Schwebekörperdurchflussmesser 16 mit Grenzwertgeber 17 als Volumenstrommesseinrichtung vorgesehen, der baugleich mit den Schwebekörperdurchflussmessern 15 ist, aber einen Schwebekörper mit einem Magneten enthält. Der Grenzwertgeber wird auf die angespitzte Schwalbenschwanzleiste des Schwebekörperdurchflussmessers 16 aufgesteckt. Durch den Magnetschwebekörper wird der Grenzwertgeber 17 geschlossen bzw. geöffnet und hält diese Stellung bis der Schwebekörper nochmals den Schalter passiert. Damit kann der Regelkreislauf bei zu geringer Abnahme von Verschnittwasser in eine Pausenfunktion gesetzt werden. Die Funktion des Grenzwertgebers 17 wird durch den Druck, die Leitfähigkeit und die chemische Zusammensetzung des Wassers nicht beeinflusst. Der Schwebekörperdurchflusmesser 16 dient damit der optischen Anzeige der aktuellen Durchflussmenge in der Ableitung 4 und der Abschaltung der Regelung bei zu niedriger bzw. keiner Abnahme von Verschnittwasser.

Ein Drosselventil 18 kann in der Ableitung 4 vorgesehen werden, um den optimalen Betriebspunkt der Vorrichtung 1 einstellen zu können, indem der Volumenstrom verändert wird.

Die Vorrichtung 1 wird beim Betrieb von zwei Seiten mit unterschiedlichen Wässern gespeist. Die Zuleitung 2 mit Stadt- oder Brunnenwasser und die Zuleitung 3 mit VE- oder Umkehrosmosewasser.

An den Eingängen der beiden Systemtrenner 14 sind Druckschalter 8 angebracht. Diese haben die Aufgabe, bei einem Druckabfall auf einer der beiden Seiten, das 3- Wege Ventil 5 so zu verstellen, dass die Seite ohne Druckabfall vollständig geöffnet wird. Dadurch wird sichergestellt, dass in jedem Fall dem Verbraucher Wasser zugeführt wird. Es ist auch möglich, die Druckschalter 8 über eine Brücke zu deaktivieren. Dies hat bei einem Druckabfall zur Folge, dass das 3-Wegeventil 5 die Seite ohne Druckabfall komplett schließt. Damit kann verhindert werden, dass Wasser außerhalb der Sollqualität eingespeist wird.

Eine zentrale Komponente der Vorrichtung 1 ist das 3-Wegeventil 5 mit seinem Stellmotor 6, welches das Mischungsverhältnis bestimmt. Der Motor 6 wird über die Steuereinheit 10 geregelt und kann kleinste Verstellwege realisieren. Die minimale Verstellzeit beträgt beispielsweise 0,1 s.

Nach dem 3-Wegeventil 5 wird das Wasser durch zwei 90° Winkel geleitet, um eine bessere Vermischung zu gewährleisten. Im Anschluss daran sitzt die induktive Leitfähigkeitssonde 7, die der Steuereinheit 10 den Leitwert über ein Signal mitteilt.

Am Ende der Vorrichtung 1 ist nochmals ein Schwebekörperdurchflussmesser 16 eingebaut. Durch einen Sensor, der am Schwebekörperurchflussmesser 16 angebracht ist, wird die Vorrichtung 1 bei Unterschreiten eines einstellbaren Grenzvolumenstromes in eine Pausenfunktion gesetzt. Dies ist nötig, da sich die Leitfähigkeit beim Stillstand verändern kann und so die Steuereinheit 10 ohne diese Abschaltung das Ventil verstellen würde. Dies hätte zur Folge, dass bei erneuter Abnahme von Verschnittwasser das 3-Wegeventil 5 erst wieder in seine ursprüngliche Position zurück gefahren werden müsste, was aufgrund der sehr geringen Ventilregelzeit relativ lange dauern könnte.

Die Steuerung des 3-Wegeventils 5 erfolgt mit Hilfe der induktiven Leitfähigkeitssonde 7. Diese teilt der Steuereinheit 10 über ein permanentes Signal die aktuelle elektrische Leitfähigkeit mit. Die Steuereinheit 10 prüft in einem einstellbaren Zeitintervall die Leitfähigkeit des Verschnittwasser. Liegt der gemessene Wert innerhalb der Hysterese des Sollwertes, so vollzieht das 3-Wegeventil 5 keine Änderung und verharrt in seiner Position. Bei einer Abweichung fährt das 3-Wegeventil 5 für einen einstellbaren Zeitraum in die entsprechende Richtung.

Die Steuereinheit 10 kann über ein Bedienfeld auf die optimalen Betriebsbedingungen eingestellt werden. Dazu gehören die elektrische Leitfähigkeit des Verschnittwassers, die Hysterese der elektrischen Leitfähigkeit des Verschnittwassers nach oben und unten, die Pausenzeit des Regelkreislaufs, die Verstellzeit des 3-Wegeventils 5 bei einer Korrektur, die Reaktionsverzögerung bei über- oder unterschreiten des Sollbereichs, d.h. die Zeit, die der Ist-Wert dauerhaft außerhalb des Sollbereiches liegen muss, damit es überhaupt zu einer Regelung des Ventils kommt, sowie die Alarmverzögerung, d.h. die Zeit zwischen Sollbereichsübertretung und Alarmmeldung.

Außerdem ist es möglich, eine Störung der Vorrichtung 1 und die aktuelle elektrische Leitfähigkeit an ein Leitsystem weiterzuleiten.

### Bezugszeichenliste

- 1: Vorrichtung
- 2: Zuleitung
- 3: Zuleitung
- 4: Ableitung
- 5: 3-Wegeventil
- 6: Motor für 5
- 7: Leitfähigkeitssonde
- 8: Druckschalter
- 9: Leitungen
- 10: Steuereinheit
- 11: Drosselventile in 2, 3
- 12: Ablassventile in 2, 3
- 13: rückspülbare Feinfilter
- 14: Systemtrenner
- 15: Schwebekörperdurchflussmesser
- 16: Schwebekörperdurchflussmesser
- 17: Grenzwertgeber von 16
- 18: Drosselventil

## Patentansprüche

1. Verfahren zur Verschneidung von Flüssigkeiten unterschiedlicher Eigenschaften als Regelgröße, dessen Regelkreislauf folgende Schritte umfasst:
a) Vergleich der gemessenen Regelgröße mit einem vorgegebenen Sollbereich,
b) bei einer Abweichung der gemessenen Regelgröße vom Sollbereich Veränderung des Mischungsverhältnisses um einen vorgegebenen Änderungsbetrag im Hinblick auf eine Annäherung an den Sollbereich,
c) Abwarten einer vorgegebenen Pausenzeit bis zur Wiederholung des Regelkreislaufs.

2. Verfahren nach Anspruch 1, wobei die Regelgröße kontinuierlich gemessen wird.

3. Verfahren nach einem der vorhergehenden Ansprüche, wobei die Abweichung der gemessenen Regelgröße vom Sollbereich während einer vorgegebenen Reaktionsverzögerungszeit bestehen muss, damit eine Veränderung des Mischungsverhältnisses vorgenommen wird.

4. Verfahren nach einem der vorhergehenden Ansprüche, wobei bei einem Druckabfall in einer Zuleitung der Flüssigkeiten unterschiedlicher Eigenschaften unter einen vorgegebenen Schaltpunkt diese Zuleitung vollständig geschlossen und die andere Zuleitung ohne Druckabfall vollständig geöffnet wird.

5. Verfahren nach einem der vorhergehenden Ansprüche, wobei der Volumenstrom der Verschnittflüssigkeit gemessen wird und bei Unterschreiten eines vorgegebenen Grenzvolumenstroms der Regelkreislauf unterbrochen wird, bis der Grenzvolumenstrom wieder überschritten wird.

6. Vorrichtung (1) zur Verschneidung von Flüssigkeiten unterschiedlicher Eigenschaften als Regelgröße umfassend:
a) Zuleitungen (2, 3) für die Flüssigkeiten unterschiedlicher Eigenschaften,
b) eine Ableitung (4) für die Verschnittflüssigkeit,
c) eine steuerbare Mischeinrichtung (vgl. 5, 6),
d) eine Messeinrichtung (vgl. 7) für die Regelgröße in der Ableitung (4),
e) Druckschalter (8) in den Zuleitungen (2, 3) und
f) eine Steuereinheit (10).

7. Vorrichtung (1) nach Anspruch 6, **dadurch gekennzeichnet, dass** eine Volumenstrommesseinrichtung (vgl. 16) in der Ableitung (4) vorgesehen ist.

8. Vorrichtung (1) nach Anspruch 7, **dadurch gekennzeichnet, dass** die Volumenstrommesseinrichtung ein Schwebekörperdurchflussmesser (16) mit Grenzwertgeber (17) ist.

9. Vorrichtung (1) nach einem der Ansprüche 6 bis 8, **dadurch gekennzeichnet, dass** die steuerbare Mischeinrichtung ein motorgesteuertes 3-Wegeventil (5) ist.

10. Verfahren und Vorrichtung (1) nach einem der vorhergehenden Ansprüche, **dadurch gekennzeichnet, dass** die Flüssigkeit Wasser ist.

11. Verfahren und Vorrichtung (1) nach einem der vorhergehenden Ansprüche, **dadurch gekennzeichnet, dass** die Eigenschaft als Regelgröße die Leitfähigkeit ist.

12. Vorrichtung (1) nach Anspruch 11, **dadurch gekennzeichnet, dass** die Messeinrichtung für die Regelgröße eine Leitfähigkeitssonde (7) ist.
